# EUROPÄISCHE PATENTSCHRIFT

(11) **EP 3 534 690 B1**
(45) Veröffentlichungstag und Bekanntmachung des Hinweises auf die Patenterteilung: **06.01.2021**
(21) Anmeldenummer: 17797911.9
(22) Anmeldetag: 03.11.2017
(51) Int. Cl.: A01G 31/06, A01G 7/02, A01G 9/24

(54) **KLIMATISCH ABGESCHLOSSENE KLIMAZELLE ZUR AUFZUCHT VON PFLANZEN IN INNENRÄUMEN**
CLIMATICALLY SEALED CLIMATE-CONTROLLED CELL FOR INDOOR CULTIVATION OF PLANTS
CELLULE CLIMATIQUE FERMÉE CLIMATIQUEMENT POUR LA CULTURE DE PLANTES EN MILIEU CLOS

(30) Priorität: 04.11.2016 DE 102016121126
(43) Veröffentlichungstag der Anmeldung: 11.09.2019
(73) Patentinhaber: Farmers Cut GmbH, 20097 Hamburg (DE)
(72) Erfinder: KORZILIUS, Mark, 20149 Hamburg (DE)
(74) Vertreter: RGTH
(86) Internationale Anmeldenummer: PCT/EP2017/078178
(87) Internationale Veröffentlichungsnummer: WO 2018/083233

(56) Entgegenhaltungen:
- EP-A1- 1 779 720
- WO-A1-2004/032605
- WO-A1-2015/152206
- WO-A2-2014/009842
- AU-A- 7 842 181
- JP-A- H04 331 144

## Beschreibung

Die Erfindung betrifft eine klimatisch abgeschlossene Klimazelle zur Aufzucht von Pflanzen in Innenräumen gemäß Anspruch 1, wobei mehrere Behältnisse in mindestens zwei Lagen innerhalb der Klimazelle übereinander angeordnet sind. Jedes Behältnis weist einen Aufnahmebereich mit einem flächig angeordneten Substrat zur Aufnahme der Pflanzen und/oder zur Aufnahme von Saatgut auf, wobei das Behältnis einen den Aufnahmebereich umfänglich umschließenden Rahmen aufweist.

Bekannt ist die Aufzucht von Pflanzen in Gewächshäusern. Dabei war es üblich, künstliches Licht in den Abendstunden und Wintermonaten einzusetzen, um das Wachstum der Pflanzen zu forcieren. Aufgrund der Weiterentwicklung LEDbasierter Leuchtmittel können nunmehr stromintensive Leuchtmittel ersetzt werden und aufgrund der vergleichsweise geringen Wärmeentwicklung in unmittelbarer Nähe zur Pflanze positioniert werden. Dies ermöglicht wiederum die Anordnung mehrerer Lagen übereinander, wobei Pflanzbereiche vertikal übereinander angeordnet und dazwischen dauerhaft künstliches Licht installiert wird.

Zur Bewässerung der Pflanzen sind insbesondere hydroponische und aeroponische Systeme bekannt. Bei hydroponischen Systemen können beispielsweise Substrate aus Steinwolle, Glaswolle oder Kokosfaser verwendet werden. In die Substrate wird Saatgut eingesetzt und entweder im sog. Ebb/Flood Verfahren oder NFT Verfahren mit Wasser und Nährstoffen versorgt. Nachteilig ist dabei, dass beispielsweise Keime über die Wasserzufuhr beziehungsweise Nährstoffzufuhr in den Wurzelbereich der Pflanzen übertragen werden können. Des Weiteren bilden sich im Wurzelbereich aufgrund des Zusammentreffens von Licht und Nährstoffen Algen.

Bei den sogenannten aeroponischen Verfahren hängen die Wurzeln einer Pflanze frei und werden in regelmäßigen Intervallen mit einem feinen Nebel aus Nährstoffen und Wasser besprüht. Nachteilig ist auch bei aeroponischen Verfahren, dass über die Wasser- und Nährstoffzufuhr Keime übertragen werden können. Systeme für aeroponische Verfahren weisen insbesondere in vertikaler Ausdehnung einen hohen Platzbedarf auf. Des Weiteren sind derartige Systeme in technischer Hinsicht oft anfällig. Beispielsweise müssen die Sprühdüsen oft gereinigt oder ausgetauscht werden.

### Stand der Technik

In der CN 205 161 271 U wird ein Behältnis zur Aufzucht von Pflanzen beschrieben.

Die EP 27 19 272 A1 beschreibt ein Verfahren zur Aufzucht von Gemüse, Pilzen oder Kräutern in einer Schachtel.

In der DE 19 28 939 wird eine Klimakammer zur Aufzucht von Pflanzen in Innenräumen beschrieben.

Die DE 1 77 86 24 beschreibt eine Vorrichtung zum Konditionieren von Luft für eine Klimakammer.

Die WO 2004/032605 A1 und die AU 78421 81 A offenbaren weitere Vorrichtungen zur Anzucht von Pflanzen.

### Darstellung der Erfindung: Aufgabe, Lösung, Vorteile

Aufgabe der vorliegenden Erfindung ist es, eine klimatisch abgeschlossene Klimazelle zur Aufzucht von Pflanzen in Innenräumen derart weiter zu verbessern, dass eventuell im Zulaufwasser beziehungsweise in der Nährstofflösung enthaltene Verunreinigungen, zum Beispiel Keime, nicht zu Krankheiten an den Wurzeln oder der Pflanze führen. Auch soll eine Algenbildung im Wurzelbereich der Pflanzen verhindert beziehungsweise zumindest reduziert werden. Des Weiteren ist es die Aufgabe der vorliegenden Erfindung, die Anordnung einzelner Lagen innerhalb der klimatisch abgeschlossenen Klimazelle möglichst platzsparend auszubilden, sodass auf geringem Raum möglichst viele Lagen übereinander angeordnet werden können und im Vergleich zu aus dem Stand der Technik bekannten Lösungen möglichst wenig Wasser zur Bewässerung der Pflanzen erforderlich ist.

Erfindungsgemäß wird hierfür eine klimatisch abgeschlossene Klimazelle zur Aufzucht von Pflanzen in Innenräumen vorgeschlagen, wobei mehrere Behältnisse in wenigstens zwei Lagen innerhalb der Klimazelle übereinander angeordnet sind. Jedes Behältnis weist dabei einen Aufnahmebereich mit einem flächig angeordneten Substrat zur Aufnahme der Pflanzen und/oder zur Aufnahme von Saatgut auf. Das Behältnis weist einen den Aufnahmebereich umfänglich umschließenden Rahmen auf. Erfindungsgemäß weist der Rahmen mindestens ein Fixierungsmittel zur temporären oder dauerhaften Befestigung des Substrats am Rahmen auf. Das Behältnis besteht somit zumindest aus dem umlaufenden Rahmen. Optional kann das Behältnis einen Boden aufweisen.

Die klimatisch abgeschlossene Klimazelle kann somit als Pflanzenaufzuchtsystem zur Aufzucht von Pflanzen in Innenräumen verstanden werden. Aufgrund der mindestens zwei Lagen ist das System als sogenanntes Indoor Vertical Farming - System zu verstehen.

Das mindestens eine Behältnis ist dabei bevorzugt als Trägerbehältnis ausgebildet. Das Saatgut beziehungsweise die Pflanze kann präzise und kontrolliert entweder manuell oder maschinell auf dem Substrat platziert werden.

Innerhalb der klimatisch abgeschlossenen Klimazelle wird ein optimales Klima für die aufzuziehenden Pflanzen eingestellt. Um innerhalb der Klimazelle ein optimales Klima einstellen zu können, weist die Klimazelle vorzugsweise Regulierungsmittel zur Regulierung einer Temperatur und/oder einer relativen Luftfeuchte und/oder eines Kohlenstoffdioxid-Gehalts und/oder eines Sauerstoff-Gehalts und/oder einer Luftgeschwindigkeit innerhalb der Klimazelle auf.

Erfindungsgemäß sind mindestens zwei Behältnisse, also auf jeder Lage ein Behältnis, vorgesehen. Bevorzugterweise können aber auf jeder Ebene beziehungsweise Lage mehrere nebeneinander und/oder hintereinander angeordnete Behältnisse vorgesehen sein. Die einzelnen Lagen sind in vertikaler Richtung, also übereinander, angeordnet. Eine einzelne Lage erstreckt sich in horizontaler Richtung beziehungsweise entlang einer horizontalen Ebene. Über jeder Lage können Leuchtmittel, insbesondere LED-basierte Leuchtmittel, zur Beleuchtung der Pflanzen angeordnet sein.

Das Behältnis kann jede geeignete Geometrie aufweisen. Beispielsweise kann das Behältnis rund, eckig oder oval ausgebildet sein. Besonders bevorzugterweise ist das Behältnis allerdings rechteckig ausgebildet. Des Weiteren kann das Behältnis aus jedem geeigneten Material bestehen beziehungsweise jedes geeignete Material aufweisen. Besonders bevorzugterweise besteht das Behältnis allerdings aus Kunststoff oder weist Kunststoff auf. Die maximale Länge und/oder Breite des Behältnisses beträgt bevorzugterweise drei Meter.

Das Substrat dient als Auflage und/oder zur Fixierung des Saatguts beziehungsweise der Pflanzen im Aufnahmebereich. Dabei ist das Substrat im Wesentlichen flächig ausgebildet und flächig im Aufnahmebereich angeordnet. Der Aufnahmebereich wird dabei durch das Behältnis ausgebildet und vom Rahmen umschlossen beziehungsweise eingegrenzt.

Das mindestens eine Fixierungsmittel kann fest, das heißt dauerhaft, mit dem Rahmen verbunden beziehungsweise am Rahmen angeordnet sein. Somit kann das mindestens eine Fixierungsmittel integrierter Bestandteil des Behältnisses sein. Alternativerweise kann das mindestens eine Fixierungsmittel aber auch lösbar mit dem Rahmen beziehungsweise dem Behältnis verbunden sein. Das mindestens eine Fixierungsmittel kann als Haltevorrichtung und/oder Klammervorrichtung zum Halten beziehungsweise Festklammern des Substrats am Rahmen ausgebildet sein.

Dadurch, dass das Substrat mittels mindestens eines Fixierungsmittels am Rahmen des Behältnisses fixiert ist, kann die Übertragung von Keimen auf das Saatgut beziehungsweise in den Wurzelbereich der Pflanzen weitestgehend vermieden werden.

Besonders vorteilhaft ist auch, dass die Pflanzen über deren gesamten Wachstumsphase vom Keimen des Saatguts bis zur Ernte in dem Behältnis verbleiben können. Das Behältnis kann je nach Pflanzenart und Wachstumsphase von einer Station in eine nächste Station innerhalb der Klimazelle oder auch in eine andere Klimazelle transportiert werden. Beispielsweise könnte bis zum Keimen des Saatguts ein anderes Klima erforderlich sein als nach dem Keimen. Alternativerweise könnte das Behältnis über alle Wachstumsphasen in derselben Klimazelle verbleiben und lediglich das Klima und/oder die Lichtintensität entsprechend der jeweiligen Wachstumsphase neu reguliert werden. Die ausgewachsenen Pflanzen können auch mit dem Behältnis zum Verbraucher transportiert werden, so dass ein Ernten der Pflanzen erst unmittelbar vor dem Verarbeiten und/oder dem Verzehr erforderlich ist. Dies wird ebenfalls insbesondere dadurch ermöglicht, dass das Substrat am Rahmen fixiert und befestigt ist.

Das Substrat ist erfindungsgemäß als Folie und/oder Matte und/oder Membran, insbesondere als Hydro-Membran, ausgebildet. Bevorzugterweise ist die Membran als permeable Membran ausgebildet.

Ferner ist bevorzugterweise vorgesehen, dass die Membran für Partikel, insbesondere Wasserpartikel und/oder Nährstoffpartikel, bis zu einer maximalen Partikelgröße von 5 nm, besonders bevorzugterweise bis zu einer maximalen Partikelgröße von 2,5 nm, sowie ganz besonders bevorzugterweise bis zu einer maximalen Partikelgröße von 1,5 nm, durchlässig ist. Größere Partikel, insbesondere Keime und Viren, können die Membran somit nicht passieren.

Das Substrat liegt mit einer ersten Seite auf einer flüssigen Nährstofflösung auf, wobei die Pflanze und/oder das Saatgut auf einer der flüssigen Nährstofflösung abgewandten zweiten Seite des Substrats aufliegt. Auf der zweiten Seite ist keine flüssige Nährstofflösung und kein Wasser angeordnet.

Das Substrat kann beispielsweise in regelmäßigen Abständen oder Intervallen mit einer Nährstofflösung unterspült werden. Dabei wird die Nährstofflösung bevorzugterweise stets unter dem Substrat geführt, da sonst die Gefahr des Keimeintrags durch die Nährstofflösung in den Wurzelbereich der Pflanzen erhöht werden würde. Dadurch kann auch der Algenbildung im Wurzelbereich entgegengewirkt oder diese vollständig vermieden werden. Das Substrat schwimmt somit bevorzugterweise auf der Nährstofflösung auf. Deshalb können sich Algen wenn nur unterhalb des Substrats und somit auf der dem Wurzelbereich abgewandten Seite bilden.

Die Ausbildung der Wurzeln der jeweiligen Pflanzen erfolgt lediglich auf der Oberseite des Substrats. Die Wurzeln wachsen nicht durch das Substrat hindurch beziehungsweise auch nicht in das Substrat hinein und ragen somit nicht in das unterhalb des Substrats angeordnete nährstoffreiche Wasser hinein. Die Wurzeln bilden lediglich winzig feine Ärmchen, die sich rund um das Saatgut auf dem Substrat verteilen. Durch die permeable Eigenschaft des Substrats kann Wasser und können Nährstoffe an die Wurzeln gelangen. Die Oberseite des Substrats bleibt dabei bevorzugterweise trocken. Dadurch kann erreicht werden, dass jene Stoffe unterhalb des Substrats verbleiben, die nicht Wasser oder Nährstoffe sind. Gleichzeitig liegt sämtliches Wurzelwerk auf der Oberseite des Substrats in der freien Atmosphäre. Der Sauerstoffanteil in der Luft ist wesentlich höher als der im Wasser gelöste Sauerstoffanteil. Dadurch können die Wurzeln mit ausreichend Sauerstoff aus der Luft versorgt werden.

Das Substrat ist am Rahmen mittels des Fixierungsmittels im Vergleich zum Aufnahmebereich erhöht fixiert. Beispielsweise kann das Substrat im Bereich des Rahmens hochgeklappt, hochgelegt oder hochgefaltet sein, um ein Übertreten beziehungsweise Überlaufen des Wassers beziehungsweise der Nährstofflösung auf die Oberseite des Substrats zu verhindern. Besonders bevorzugterweise ist das Substrat am Rahmen mittels des Fixierungsmittels im Vergleich zum Aufnahmebereich um mindestens 0,5 cm, ganz besonders bevorzugterweise um mindestens 1,0 cm erhöht fixiert.

Das mindestens eine Fixierungsmittel umschließt das Behältnis bevorzugterweise bereichsweise oder vollständig. Auch ist bevorzugterweise vorgesehen, dass das mindestens eine Fixierungsmittel entlang des Rahmens angeordnet ist. Dabei kann das Fixierungsmittel am und entlang des Rahmens, beispielsweise umlaufend, angeordnet sein. Das Fixierungsmittel kann mechanisch ausgebildet sein. Beispielsweise kann das Fixierungsmittel in den Rahmen integriert sein und/oder angesteckt und/oder aufgesteckt und/oder geschraubt und/oder geklebt sein.

Besonders bevorzugterweise ist vorgesehen, dass der Rahmen mehrteilig, insbesondere zweiteilig, ausgebildet ist, wobei das Fixierungsmittel durch mindestens ein Rahmenteil gebildet wird. Beispielsweise können zwei Rahmenteile vorgesehen sein, welche aufeinander gesteckt sind und das Substrat zwischen die beiden Rahmenteile geklemmt wird. Eines der beiden Rahmenteile kann dabei besonders bevorzugterweise eine größere Höhe aufweisen als das zweite Rahmenteil. Dadurch kann das Substrat näher an der oberen Kante am Rahmen fixiert beziehungsweise zwischen den beiden Rahmenteilen eingeklemmt werden.

Das erste Rahmenteil weist bevorzugterweise eine Nut auf. Das zweite Rahmenteil weist bevorzugterweise eine Feder auf. Dabei können beide Rahmenteile mittels einer Nut- und Federverbindung miteinander verbunden sein, wobei das Substrat zwischen den beiden Rahmenteilen eingeklemmt und fixiert ist. Über die Nut- und Federverbindung können die beiden Rahmenteile ineinander beziehungsweise aufeinander gesteckt werden. Das Substrat kann zwischen Nut und Feder eingeklemmt oder eingespannt sein.

Ferner ist bevorzugterweise vorgesehen, dass das Behältnis einen Boden mit Durchbrechungen oder einen gitterartigen Boden aufweist, wobei das Substrat auf dem Boden aufliegt. Der Boden bildet dabei den Aufnahmebereich.

Das Behältnis kann in einer wannenförmigen Aufnahmeeinheit angeordnet sein. Besonders bevorzugterweise können mehrere Behältnisse in einer wannenförmigen Aufnahmeeinheit angeordnet sein. Zum Beispiel können bis zu zwölf Behältnisse in einer wannenförmigen Aufnahmeeinheit angeordnet werden. Die wannenförmige Aufnahmeeinheit kann jede geeignete Form beziehungsweise Geometrie aufweisen. Besonders bevorzugterweise ist die wannenförmige Aufnahmeeinheit quadratisch oder rechteckig ausgebildet. Beispielsweise kann die wannenförmige Aufnahmeeinheit als Transporteinheit zum Transport der darin angeordneten Behältnisse oder als feststehende Schiene beziehungsweise Rinne ausgebildet sein. Innerhalb der Schiene können die Behältnisse versetzt beziehungsweise verschoben werden.

In der wannenförmigen Aufnahmeeinheit kann das Wasser beziehungsweise die flüssige Nährstofflösung angeordnet sein. Hierfür kann die wannenförmige Aufnahmeeinheit eine Einlass- und/oder Auslassöffnung für die wässrige Nährstofflösung aufweisen. Das Behältnis beziehungsweise die Behältnisse kann beziehungsweise können in der wannenförmigen Aufnahmeeinheit stehen, liegen oder innerhalb der wannenförmigen Aufnahmeeinheit auf der flüssigen Nährstofflösung schwimmen.

Bevorzugterweise werden die mindestens zwei Lagen durch übereinander angeordnete im Wesentlichen ringförmige oder kreisförmige oder teilkreisförmige oder eckige Plattformen gebildet, wobei jeweils mehrere Behältnisse auf einer Plattform angeordnet sind. Auch können auf jeder Plattform mehrere wannenförmige Aufnahmeeinheiten vorgesehen sein, wobei in jeder wannenförmigen Aufnahmeeinheit wiederum mehrere Behältnisse angeordnet sind.

Besonders bevorzugterweise können die Plattformen teilkreisförmig ausgebildet sein, das heißt in Form eines Kreisausschnitts beziehungsweise Kreissektors ausgebildet sein. Hierdurch kann ein Freigang beziehungsweise Weg in den mittleren zentralen Abschnitt vorgesehen sein. Auch könnte jede Plattform im Wesentlichen ringförmig mit einem Innenradius und einem Außenradius ausgebildet sein. Dadurch entsteht eine mittlere Ausnehmung beziehungsweise zentrale Öffnung, in welcher Personen oder automatische Sortier- und/oder Bestückungssysteme angeordnet werden können. Der Außenradius ist dabei größer als der Innenradius der Plattform. Bevorzugterweise sind die einzelnen Plattformen starr und somit nicht drehbar oder rotierbar gelagert.

Jede Plattform weist bevorzugterweise mehrere beabstandet zueinander und radial ausgerichtete Schienen auf, in welchen die Behältnisse angeordnet sind und von einem Plattforminneren in Richtung eines Plattformäußeren verschiebbar sind. Durch die einzelnen Schienen werden Pflanzenreihen ausgebildet. Somit sind die einzelnen Pflanzenreihen sternförmig auf den Plattformen angeordnet. In den Schienen kann eine wässrige Nährstofflösungszufuhr fließend, stehend oder in Intervallen angeordnet werden. Jede Schiene bildet eine wannenförmige Aufnahmeeinheit.

Ferner ist bevorzugterweise vorgesehen, dass ein Abstand zwischen zwei benachbarten Schienen in radialer Richtung vom Plattforminneren hin zum Plattformäußeren kontinuierlich zunimmt. Dabei ist die jeweilige Breite einer Schiene über deren gesamten Länge bevorzugterweise konstant. Im Wurzelbereich bleibt der Platz somit in jedem Bereich konstant. Der Platz um das Behältnis herum wird durch das kontinuierliche Herausschieben vom Plattforminneren hin zum Plattformäußeren ständig vergrößert, sodass sich die Pflanze während ihres Wachstums weiter entfalten kann. Aufgrund der hohen Blattdichte kann dabei der Lichtverlust in sämtlichen Bereichen minimiert werden. Ein Versetzen beziehungsweise Ausjüngen und Umpflanzen der einzelnen Pflanzen ist somit nicht mehr zwingend notwendig. Die Pflanzen können am Plattforminneren in die Schiene eingesetzt werden. Während des Wachstums werden die Pflanzen entlang der Schienen kontinuierlich nach außen verschoben. Dies kann in einfacher Weise dadurch geschehen, dass neue Pflanzen am Plattforminneren in die Schienen eingesetzt werden und dadurch die vorher eingesetzten Pflanzen in den Schienen weiter nach außen geschoben werden. Dies kann mit weiteren Pflanzen durch neues Einsetzen in den einzelnen Schienen wiederholt werden. Erreicht eine Pflanze den äußeren Bereich beziehungsweise das Plattformäußere, kann diese von außen entnommen beziehungsweise geerntet werden. Zwischen den einzelnen Behältnissen innerhalb einer Schiene können Abstandshalter vorgesehen sein beziehungsweise eingesetzt werden.

Bevorzugterweise könnte auch eine Kombination aus eckiger und runder Plattform vorgesehen sein. Beispielsweise könnte das Saatgut in Behältnissen auf eckigen Plattformen zum Keimen gebracht werden. Anschließend könnten die Pflanzen umgesetzt und auf einer runden Plattform angeordnet werden. Hierfür könnten die Pflanzen nach dem Keimen in kleinere Behältnisse gesetzt und diese in Schienen auf der runden Plattform eingesetzt werden.

### Kurze Beschreibung der Zeichnungen

Die Erfindung wird im Folgenden anhand bevorzugter Ausführungsformen beispielhaft erläutert.

Es zeigen schematisch:
- Figur 1:: eine klimatisch abgeschlossene Klimazelle mit mehreren über einander angeordneten Lagen,
- Figur 2:: eine wannenförmige Aufnahmeeinheit mit mehreren darin angeordneten Behältnissen,
- Figur 3:: ein Behältnis zur Aufnahme der Pflanzen und/oder des Saatguts,
- Figur 4:: eine zweiteilige Ausbildung des Behältnisses aus Figur 3,
- Figur 4a:: eine Prinzipdarstellung der Anordnung und Fixierung des Substrats innerhalb der Behältnisses,
- Figur 5:: mehrere übereinander angeordnete ringförmige Plattformen,
- Figur 6:: eine ringförmig ausgebildete Plattform,
- Figur 6a:: kreisausschnittsförmig ausgebildete Plattformen,
- Figur 7:: eine Schiene einer ringförmig ausgebildeten Plattform, und
- Figur 7a:: ein Behältnis zum Einsetzen in eine Schiene nach Figur 7.

### Bevorzugte Ausführungsformen der Erfindung

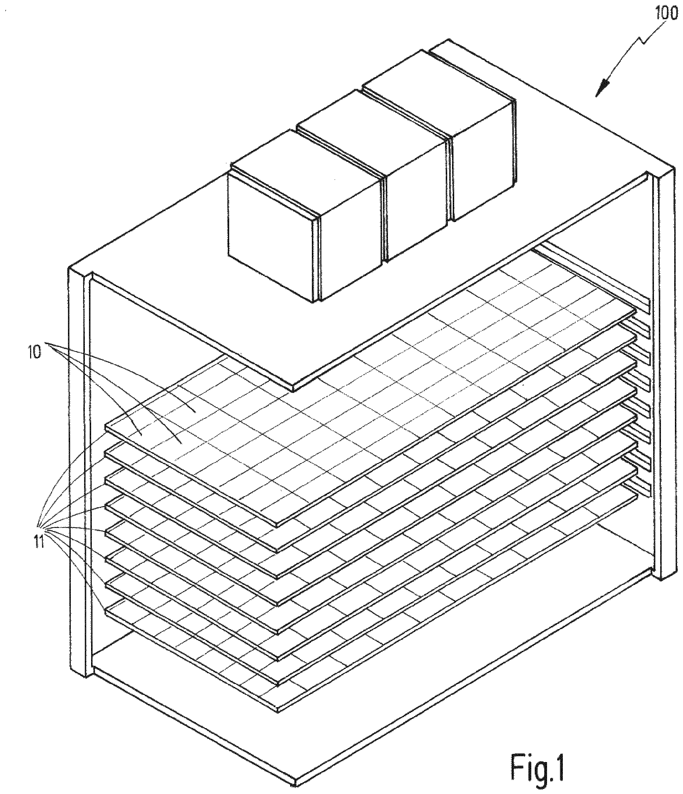

Figur 1 zeigt eine klimatisch abgeschlossene Klimazelle 100 zur Aufzucht von Pflanzen in Innenräumen. Innerhalb der klimatisch abgeschlossenen Klimazelle 100 sind mehrere Lagen 11 angeordnet. Auf jeder Lage 11 sind wiederum mehrere Behältnisse 10 vorgesehen. Jedes Behältnis 10 bildet einen Aufnahmebereich 12 mit einem flächig angeordneten Substrat 13 (in Figur 1 nicht dargestellt) zur Aufnahme von Pflanzen und/oder von Saatgut aus.

Der besseren Übersicht halber ist die klimatisch abgeschlossene Klimazelle 100 in Figur 1 halb offen dargestellt.

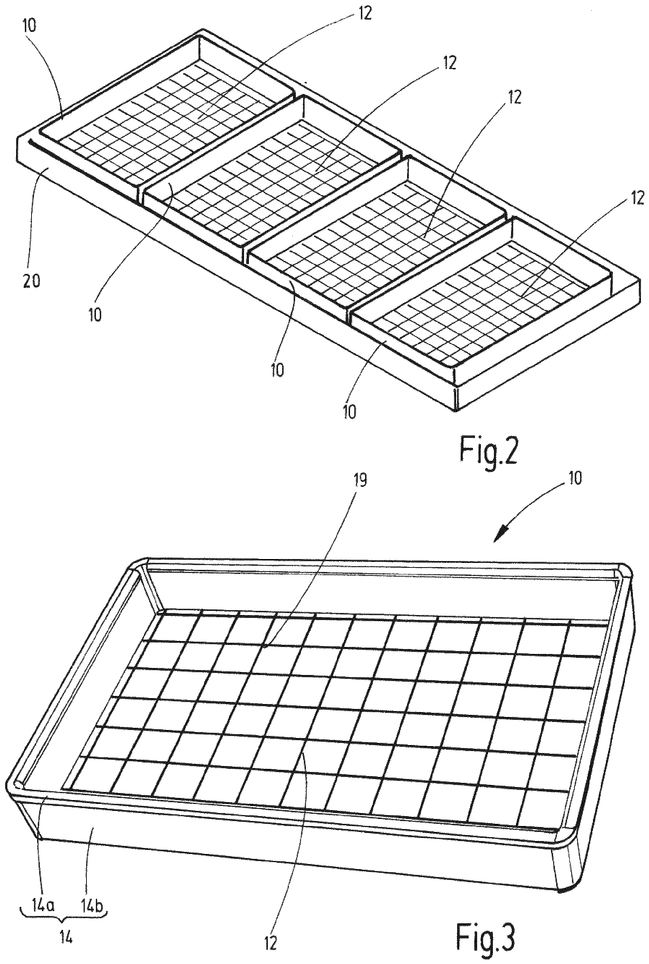

Die einzelnen Behältnisse 10 können in einer wannenförmigen Aufnahmeeinheit 20 angeordnet sein. Dies ist beispielhaft in Figur 2 dargestellt. In der wannenförmigen Aufnahmeeinheit 20 kann Wasser beziehungsweise eine flüssige Nährstofflösung angeordnet werden. Auf der flüssigen Nährstofflösung können die einzelnen Behältnisse 10 aufschwimmen. Die einzelnen Behältnisse 10 weisen einen umlaufenden Rahmen 14 auf, welcher jeweils einen Aufnahmebereich 12 für die Aufnahme der Pflanzen und/oder des Saatguts umschließt. Die in Figur 2 gezeigte wannenförmige Aufnahmeeinheit 20 ist beispielsweise als Transporteinheit ausgebildet.

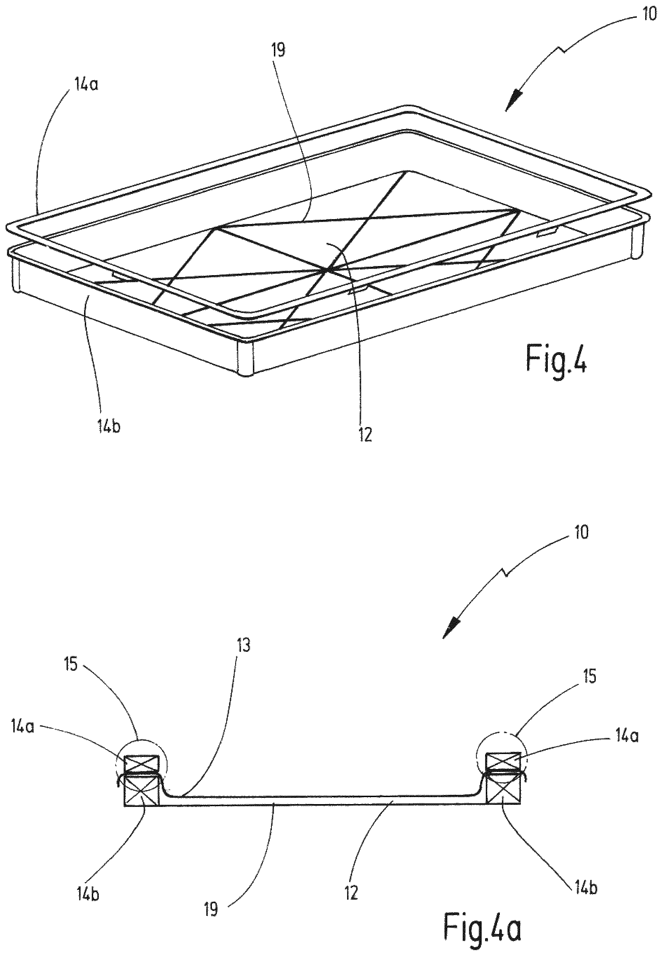

Figur 3 zeigt ein Behältnis 10 aus Figur 2. Der Rahmen 14 ist zweiteilig ausgebildet und besteht aus einem oberen schmalen ersten Rahmenteil 14a und einem unteren höheren zweiten Rahmenteil 14b. Die beiden Rahmenteile 14a, 14b sind aufeinander gesteckt. Der Rahmen 14 umschließt den Aufnahmebereich 12. Der Aufnahmebereich 12 wird durch einen gitterartigen Boden 19 ausgebildet. Im Aufnahmebereich 12 wird ein Substrat 13 flächig angeordnet. Das Substrat 13 ist der besseren Übersicht halber in Figur 3 nicht dargestellt. Figur 4a zeigt eine Prinzipdarstellung zur Anordnung und Fixierung des Substrats 13.

In Figur 4 ist die zweiteilige Ausgestaltung des Rahmens 14 für das Behältnis 10 aus Figur 3 gezeigt. Die beiden Rahmenteile 14a, 14b können mittels einer Nut-und Federverbindung aufeinander gesteckt werden. Zwischen den beiden Rahmenteilen 14a, 14b kann das Substrat 13 eingeklemmt werden. Somit wird das Substrat 13 im Bereich des Rahmens 14 fixiert und im Vergleich zum mittleren Aufnahmebereich 12 höher angeordnet, sodass Wasser beziehungsweise die Nährstofflösung nicht über den Rand auf die Oberfläche des Substrats 13 überlaufen kann.

In Figur 4a ist eine Prinzipdarstellung der Fixierung des Substrats 13 am Rahmen 14 gezeigt. Das Substrat 13 ist zwischen den beiden Rahmenteilen 14a, 14b eingeklemmt und im Vergleich zum Aufnahmebereich 12 höher angeordnet beziehungsweise fixiert. Wird das Behältnis 10 in eine wannenförmige Aufnahmeeinheit 20 auf eine Nährstofflösung 18 gesetzt, verbleibt die Nährstofflösung lediglich unterhalb des Substrats 13. Das Substrat 13 schwimmt somit auf der Nährstofflösung 18 auf. Auf der der Nährstofflösung 18 abgewandten Seite des Substrats 13 kann das Saatgut beziehungsweise können die Pflanzen angeordnet und fixiert werden.

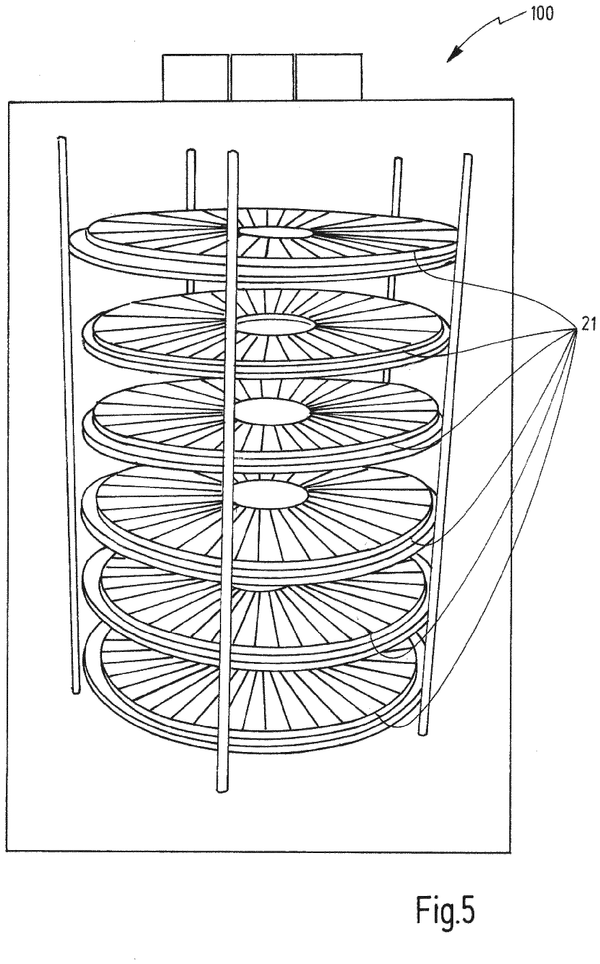

Figur 5 zeigt eine Ausgestaltung einer klimatisch abgeschlossenen Klimazelle 100, wobei die einzelnen Lagen 11 durch im Wesentlichen kreisrunde und ringförmig ausgebildete Plattformen 21 gebildet werden.

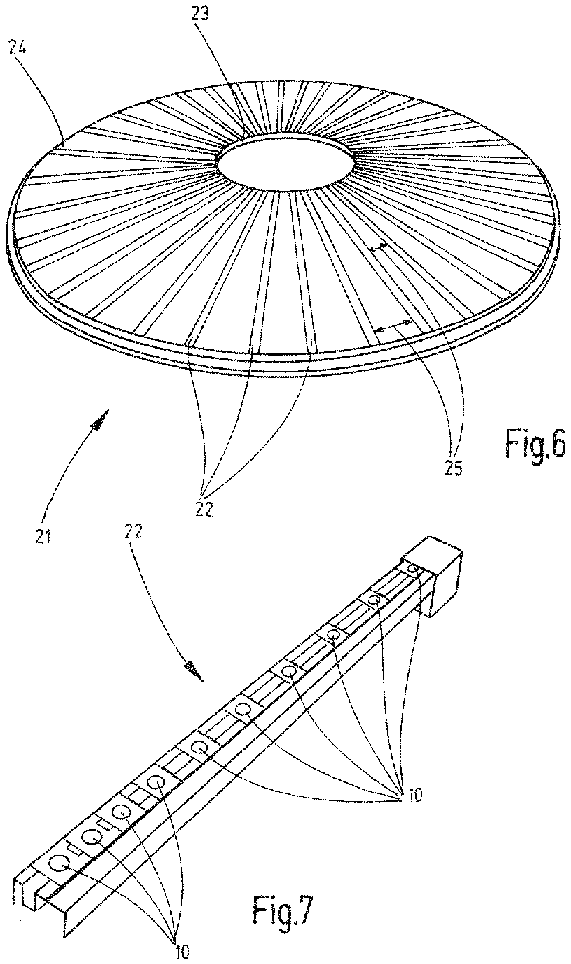

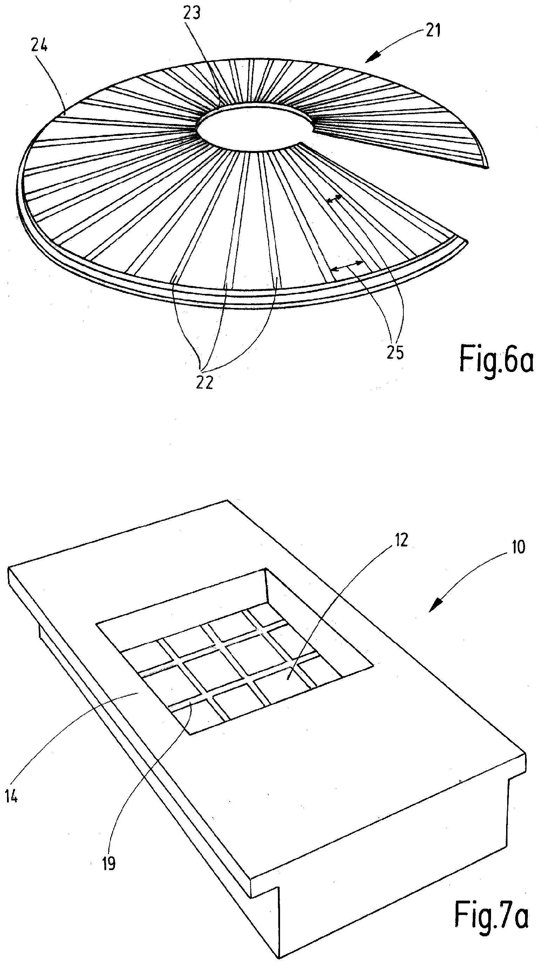

Figur 6 zeigt eine einzelne Plattform 21 aus Figur 5. Im zentralen Bereich weist die ringförmig ausgebildete Plattform 21 eine Ausnehmung beziehungsweise einen freien Bereich auf. Pflanzen können in einem Behältnis 10 aus diesem mittleren beziehungsweise zentralen Bereich in eine Schiene 22 im Bereich des Plattforminneren 23 eingesetzt werden. Die Schienen 22 verlaufen radial nach außen, wobei sich der Abstand 25 zwischen zwei benachbarten Schienen 22 kontinuierlich von innen nach außen hin betrachtet vergrößert. Neue Pflanzen können in weiteren Behältnissen 10 im Bereich des Plattforminneren 23 neu eingesetzt und nachgeschoben werden, wobei kontinuierlich die bereits eingesetzten Pflanzen in deren Behältnissen 10 nach außen, das heißt in Richtung Plattformäußeres 24, geschoben werden. Bei diesem beispielhaft gezeigten System ist die wannenförmige Aufnahmeeinheit 20 als Schiene 22 ausgebildet.

Die Breite der einzelnen Schienen 22 ist entlang deren Länge konstant. Die Pflanzen müssen somit während deren Wachstum nicht umgetopft beziehungsweise versetzt werden. Sie werden lediglich kontinuierlich von innen nach außen in radialer Richtung entlang einer Schiene 22 verschoben. Da der Abstand 25 zwischen zwei benachbarten Schienen 22 von innen nach außen hin kontinuierlich größer wird, ist der Platz zur Entfaltung für jede einzelne Pflanze außen größer als innen. Von außen beziehungsweise im Bereich des Plattformäußeren 24 können die ausgewachsenen Pflanzen entnommen und/oder abgeerntet werden.

In Figur 6a sind kreisausschnittsförmig ausgebildete Plattformen 21 dargestellt. Hierdurch wird ein Freigang beziehungsweise Weg in den mittleren zentralen Abschnitt ausgebildet, was den Zugang für Personen und/oder Maschinen erleichtert.

Figur 7 zeigt eine einzelne Schiene 22 mit mehreren darin eingesetzten Behältnissen 10. Der besseren Übersicht halber sind die Pflanzen in den Behältnissen 10 nicht gezeigt. Zwischen den einzelnen Behältnissen 10 können Abstandshalter eingesetzt werden (dies ist in Figur 7 der besseren Übersicht halber nicht dargestellt).

Figur 7a zeigt eine weitere Ausgestaltung eines Behältnisses 10. Der besseren Übersicht halber ist das Behältnis 10 in Figur 7a ohne Substrat 13 dargestellt. Das in Figur 7a gezeigte Behältnis 10 ist insbesondere für den Einsatz in eine Schiene 22 aus Figur 7 ausgebildet.

### Bezugszeichenliste

- 100: Klimatisch abgeschlossene Klimazelle

- 10: Behältnis
- 11: Lagen
- 12: Aufnahmebereich
- 13: Substrat
- 14: Rahmen
- 14a, 14b: Rahmenteile
- 15: Fixierungsmittel
- 16: Erste Seite des Substrats
- 17: Zweite Seite des Substrats
- 18: Nährstofflösung
- 19: Boden des Behältnisses
- 20: Wannenförmige Aufnahmeeinheit
- 21: Plattform
- 22: Schiene
- 23: Plattforminneres
- 24: Plattformäußeres
- 25: Abstand zwischen zwei benachbarten Schienen

## Patentansprüche

1. Klimatisch abgeschlossene Klimazelle (100) zur Aufzucht von Pflanzen in Innenräumen, wobei mehrere Behältnisse (10) in mindestens zwei Lagen (11) innerhalb der Klimazelle (100) übereinander angeordnet sind, wobei jedes Behältnis (10) einen Aufnahmebereich (12) mit einem flächig angeordnetem Substrat (13) zur Aufnahme der Pflanzen und/oder zur Aufnahme von Saatgut aufweist, wobei das Behältnis (10) einen den Aufnahmebereich (12) umfänglich umschließenden Rahmen (14) aufweist, wobei der Rahmen (14) mindestens ein Fixierungsmittel (15) zur temporären oder dauerhaften Befestigung des Substrats (13) am Rahmen aufweist, **dadurch gekennzeichnet, dass** das Substrat (13) am Rahmen (14) mittels des Fixierungsmittels (15) im Vergleich zum Aufnahmebereich (12) erhöht fixiert ist, wobei das Substrat (13) als Folie und/oder Matte und/oder Membran ausgebildet ist, wobei das Substrat (13) mit einer ersten Seite (16) auf einer flüssigen Nährstofflösung (18) aufliegt, wobei die Pflanze und/oder das Saatgut auf einer der flüssigen Nährstofflösung (18) abgewandten zweiten Seite (17) des Substrats (13) aufliegt, wobei auf der zweiten Seite (17) keine flüssige Nährstofflösung (18) und kein Wasser angeordnet ist.

2. Klimatisch abgeschlossene Klimazelle (100) gemäß Anspruch 1,
**dadurch gekennzeichnet,**
**dass** die Klimazelle (100) Regulierungsmittel zur Regulierung einer Temperatur und/oder einer relativen Luftfeuchte und/oder eines Kohlenstoffdioxid-Gehalts und/oder eines Sauerstoff-Gehalts und/oder einer Luftgeschwindigkeit innerhalb der Klimazelle (100) aufweist.

3. Klimatisch abgeschlossene Klimazelle (100) gemäß Anspruch 1 oder 2,
**dadurch gekennzeichnet,**
**dass** das Substrat (13) als Hydro-Membran ausgebildet ist.

4. Klimatisch abgeschlossene Klimazelle (100) gemäß Anspruch 3,
**dadurch gekennzeichnet,**
**dass** das Substrat (13) als Membran ausgebildet ist, wobei die Membran für Partikel, insbesondere Wasserpartikel und/oder Nährstoffpartikel, bis zu einer maximalen Partikelgröße von 5 nm, bevorzugterweise 2,5 nm, besonders bevorzugterweise 1,5 nm, durchlässig ist.

5. Klimatisch abgeschlossene Klimazelle (100) gemäß einem der vorhergehenden Ansprüche,
**dadurch gekennzeichnet,**
**dass** das mindestens eine Fixierungsmittel (15) das Behältnis (10) bereichsweise oder vollständig umschließt und/oder dass das mindestens eine Fixierungsmittel (15) entlang des Rahmens (14) angeordnet ist.

6. Klimatisch abgeschlossene Klimazelle (100) gemäß einem der vorhergehenden Ansprüche,
**dadurch gekennzeichnet,**
**dass** der Rahmen (14) mehrteilig ausgebildet ist, wobei das Fixierungsmittel (15) durch mindestens ein Rahmenteil (14a, 14b) gebildet wird.

7. Klimatisch abgeschlossene Klimazelle (100) gemäß Anspruch 6,
**dadurch gekennzeichnet,**
**dass** ein erstes Rahmenteil (14a) eine Nut aufweist und ein zweites Rahmenteil (14b) eine Feder aufweist, wodurch beide Rahmenteile (14a, 14b) mittels einer Nut-und-Federverbindung miteinander verbunden sind, wobei das Substrat (13) zwischen den beiden Rahmenteilen (14a, 14b) eingeklemmt und fixiert ist.

8. Klimatisch abgeschlossene Klimazelle (100) gemäß einem der vorhergehenden Ansprüche,
**dadurch gekennzeichnet,**
**dass** das Behältnis (10) einen Boden (19) mit Durchbrechungen und/oder einen gitterartigen Boden (19) aufweist, wobei das Substrat (13) auf dem Boden (19) aufliegt, und wobei das Behältnis (13) in einer wannenförmigen Aufnahmeeinheit (20) angeordnet ist.

9. Klimatisch abgeschlossene Klimazelle (100) gemäß einem der vorhergehenden Ansprüche,
**dadurch gekennzeichnet,**
**dass** die mindestens zwei Lagen (11) durch übereinander angeordnete im Wesentlichen ringförmige oder kreisförmige oder teilkreisförmige oder eckige Plattformen (21) gebildet werden, wobei jeweils mehrere Behältnisse (10) auf einer Plattform (21) angeordnet sind.

10. Klimatisch abgeschlossene Klimazelle (100) gemäß Anspruch 9,
**dadurch gekennzeichnet,**
**dass** jede Plattform (21) mehrere beabstandet zueinander und radial ausgerichtete Schienen (22) aufweist, in welchen die Behältnisse (10) angeordnet sind und von einem Plattforminneren (23) in Richtung eines Plattformäußeren (24) verschiebbar sind.

11. Klimatisch abgeschlossene Klimazelle (100) gemäß Anspruch 10,
**dadurch gekennzeichnet,**
**dass** ein Abstand (25) zwischen zwei benachbarten Schienen (22) in radialer Richtung vom Plattforminneren (23) hin zum Plattformäußeren (24) kontinuierlich zunimmt.

## Claims

1. Climatically sealed climate cell (100) for cultivating plants in indoor spaces, wherein a plurality of containers (10) are arranged one above the other in at least two tiers (11) within the climate cell (100), wherein each container (10) has an accommodation area (12) with a substrate (13) arranged in a flat manner to accommodate the plants and / or to accommodate seeds, wherein the container (10) has a frame (14) circumferentially surrounding the accommodation area (12),
wherein the frame (14) has at least one fixing means (15) for the temporary or permanent attachment of the substrate (13) to the frame, **characterized in that** the substrate (13) is fixed to the frame (14) elevated compared to the accommodation area (12), by means of the fixing means (15), wherein the substrate (13) is configured as a film and / or mat and / or membrane, wherein the substrate (13) with a first side (16) lies on a liquid nutrient solution (18), wherein the plant and / or the seed lies on a second side (17) of the substrate (13) facing away from the liquid nutrient solution (18), wherein no liquid nutrient solution (18) and no water are arranged on the second side (17).

2. Climatically sealed climate cell (100) according to claim 1,
**characterized in that**
the climate cell (100) has regulating means for regulating a temperature and / or a relative humidity and / or a carbon dioxide content and / or an oxygen content and / or an air speed within the climate cell (100).

3. Climatically sealed climate cell (100) according to claim 1 or 2,
**characterized in that**
the substrate (13) is configured as a hydro membrane.

4. Climatically sealed climate cell (100) according to claim 3,
**characterized in that**
the substrate (13) is configured as a membrane, wherein the membrane is permeable to particles, in particular water particles and / or nutrient particles, up to a maximum particle size of 5 nm, preferably 2.5 nm, particularly preferably 1.5 nm.

5. Climatically sealed climate cell (100) according to one of the preceding claims,
**characterized in that**
the at least one fixing means (15) partially or completely surrounds the container (10) and / or that the at least one fixing means (15) is arranged along the frame (14).

6. Climatically sealed climate cell (100) according to one of the preceding claims,
**characterized in that**
the frame (14) is configured in several parts, wherein the fixing means (15) is formed by at least one frame part (14a, 14b).

7. Climatically sealed climate cell (100) according to claim 6,
**characterized in that**
a first frame part (14a) has a groove and a second frame part (14b) has a tongue, whereby both frame parts (14a, 14b) are connected to one another by means of a groove-and-tongue connection, wherein the substrate (13) is clamped and fixed between the two frame parts (14a, 14b).

8. Climatically sealed climate cell (100) according to one of the preceding claims,
**characterized in that**
the container (10) has a base (19) with openings and / or a grid-like base (19), wherein the substrate (13) lies on the base (19), and wherein the container (10) is arranged in a tray-shaped accommodation unit (20).

9. Climatically sealed climate cell (100) according to one of the preceding claims,
**characterized in that**
the at least two tiers (11) are formed by essentially annular or circular or partially circular or angular platforms (21) arranged one above the other, wherein a plurality of containers (10) are respectively arranged on a platform (21).

10. Climatically sealed climate cell (100) according to claim 9,
**characterized in that**
each platform (21) has several rails (22) that are spaced apart from each other and are radially aligned, in which the containers (10) are arranged and can be displaced from the inner part of a platform (23) in the direction of an outer part of the platform (24).

11. Climatically sealed climate cell (100) according to claim 10,
**characterized in that**
a distance (25) between two adjacent rails (22) increases continuously in the radial direction from the inner part of the platform (23) to the outer part of the platform (24).

## Revendications

1. Cellule climatisée climatiquement isolée (100) pour la culture de plantes dans des locaux intérieurs, sachant que plusieurs contenants (10) sont disposés l'un sur l'autre dans au moins deux couches (11) à l'intérieur de la cellule climatisée (100), sachant que chaque contenant (10) comporte une zone de logement (12) avec un substrat (13) disposé sur toute la surface pour recevoir des plantes et/ou pour recevoir des semences, sachant que le contenant (10) comporte un cadre (14) entourant sur le périmètre la zone de logement (12),
sachant que le cadre (14) comporte au moins un moyen de fixation (15) pour la fixation temporaire ou permanente du substrat (13) sur le cadre, **caractérisée en ce que** le substrat (13) est fixé au cadre (14) au moyen du moyen de fixation (15) surélevé en comparaison de la zone de logement (12), sachant que le substrat (13) est constitué sous la forme d'une feuille et/ou d'une natte et/ou d'une membrane, sachant que le substrat (13) repose avec un premier côté (16) sur une solution nutritive liquide (18), sachant que la plante et/ou les semences reposent sur un deuxième côté (17) du substrat (13) opposé à la solution nutritive liquide (18), sachant qu'il n'y a aucune solution nutritive liquide (18) ni eau disposée sur le deuxième côté (17).

2. Cellule climatisée climatiquement isolée (100) selon la revendication 1,
**caractérisée en ce que**
la cellule climatisée (100) comporte un moyen de régulation pour réguler une température et/ou une humidité relative de l'air et/ou une teneur en dioxyde de carbone et/ou une teneur en oxygène et/ou une vitesse de l'air à l'intérieur de la cellule climatisée (100).

3. Cellule climatisée climatiquement isolée (100) selon la revendication 1 ou 2,
**caractérisée en ce que**
le substrat (13) est constitué comme une hydro-membrane.

4. Cellule climatisée climatiquement isolée (100) selon la revendication 3,
**caractérisée en ce que**
le substrat (13) est constitué sous la forme d'une membrane, sachant que la membrane est perméable aux particules, en particulier aux particules d'eau et/ou aux particules de nutriment jusqu'à une taille particulaire maximale de 5 nm, de préférence 2,5 nm, en particulier de préférence 1,5 nm.

5. Cellule climatisée climatiquement isolée (100) selon l'une quelconque des revendications précédentes,
**caractérisée en ce que**
l'au moins un moyen de fixation (15) entoure le contenant (10) par endroit ou complètement et/ou **en ce que** l'au moins un moyen de fixation (15) est disposé le long du cadre (14).

6. Cellule climatisée climatiquement isolée (100) selon l'une quelconque des revendications précédentes,
**caractérisée en ce que**
le cadre (14) est constitué en plusieurs parties, sachant que le moyen de fixation (15) est formé par au moins une partie de cadre (14a, 14b).

7. Cellule climatisée climatiquement isolée (100) selon la revendication 6,
**caractérisée en ce qu'**
une première partie de cadre (14a) comporte une rainure et une deuxième partie de cadre (14b) comporte un ressort, ce par quoi les deux parties de cadre (14a, 14b) sont reliées entre elles au moyen d'une liaison rainure et ressort, sachant que le substrat (13) est enserré et fixé entre les deux parties de cadre (14a, 14b).

8. Cellule climatisée climatiquement isolée (100) selon l'une quelconque des revendications précédentes,
**caractérisée en ce que**
le contenant (10) comporte un fond (19) avec des percées et/ou un fond en forme de grille (19), sachant que le substrat (13) repose sur le fond (19) et sachant que le contenant (10) est disposé dans une unité de logement (20) en forme de bac.

9. Cellule climatisée climatiquement isolée (100) selon l'une quelconque des revendications précédentes,
**caractérisée en ce que**
les au moins deux couches (11) sont formées par des plateformes (21) disposées l'une sur l'autre pour l'essentiel de forme annulaire, ou circulaire ou partiellement circulaire ou polygonale, sachant que plusieurs contenants (10) sont respectivement disposés sur une plateforme (21).

10. Cellule climatisée climatiquement isolée (100) selon la revendication 9,
**caractérisée en ce que**
chaque plateforme (21) comporte plusieurs rails (22) à distance l'un de l'autre et orientés radialement dans lesquels les contenants (10) sont disposés et peuvent être déplacés d'un intérieur de plateforme (23) en direction d'un extérieur de plateforme (24).

11. Cellule climatisée climatiquement isolée (100) selon la revendication 10,
**caractérisée en ce qu'**
une distance (25) augmente en continu entre deux rails (22) voisins dans la direction radiale allant de l'intérieur de la plateforme (23) à l'extérieur de la plateforme (24).
